# EUROPEAN PATENT APPLICATION

(11) **EP 1 314 634 A2**
(43) Date of publication of application: **28.05.2003**
(21) Application number: 02257815.7
(22) Date of filing: 12.11.2002
(51) Int. Cl.: B62D 33/00

(54) **Lift truck and lift truck operating method**

(30) Priority: 27.11.2001 GB 0128331
(71) Applicant: Translift Engineering Limited, Redditch, Worcestershire B98 0RB (GB)
(72) Inventor: Brown, Frederick L., Stratford-upon-Avon Warwickshire CV379LB (GB)
(74) Representative: Jones, John Bryn

(57) **Abstract**

A lift truck (10) comprising a first portion (12) having a carriage (15) mounted on a carriage mast (16) and one or more first wheels (32), and a second portion (14) distinct from the first and comprising a cab (22) mounted on a cab mast (20) to enable the raising of the cab, and one or more second wheels (30), the first portion being pivotally mounted to the second portion, to permit the truck to be steered by adjusting the angle of the first portion relative to the second, wherein substantially all controls (26) for controlling the functioning of the truck during depositing and pickup of goods are arranged so as to permit the raising thereof together with the cab.

## Description

The present invention relates to a lift truck, in particular a lift truck for use in warehouses. The present invention additionally relates to a method of operating a lift truck.

Lift trucks are known and fall into two broad categories, building trucks and warehouse type trucks.

Building trucks are used outside to transport material around building sites. Typically building trucks will have a mast with vertically moveable forks upon which the material can be lifted and carried.

Building sites have contrasting types of terrain, such as soft ground, rough ground and surfaces having loose material, in addition to the possibility of the terrain being wet and sloping. Therefore building trucks have particular features which enable them to negotiate such terrain.

To operate over rough terrain, the building truck must have a suitably high ground clearance in addition to the suspension properties of pneumatic tyres. The tyre footprint loading of the building truck must be sufficiently low to prevent it from sinking into soft ground. Consequently, high flotation tyres are employed, and the weight of the building truck is minimised, the weight being determined by the structural strength requirements of the truck.

To maintain traction over the various terrain, particularly when conditions are wet, and the surface is inclined, building trucks often employ drive to all four wheels. This is particularly necessary when taking into consideration the low weight of the building truck. Furthermore the centre of gravity is located at the approximately the central position of the building truck to load all four wheels evenly, thus ensuring each wheel is capable of providing tractive force.

Building trucks must also be sufficiently manoeuvrable, and generally have the ability to turn the forks and steering up to a maximum of about 45 degrees either side of the forward direction (i.e. in a yaw direction). However, angles significantly above 45 degrees are not used since they tend to make the building truck unstable.

Building trucks are powered by petrol or diesel driven internal combustion engines where the harmful emissions are diluted in the atmosphere.

Building trucks are not required to lift loads to very great heights because:-
a) other forms of lifting devices are available e.g. cranes.
b) lifting a load to a significant height, when the building truck is on uneven ground is dangerous since the truck may tip over as the load is raised. This is particularly significant on building trucks, which have pneumatic tyres (and hence allow roll or pitch of the truck body as the load is raised) and, as mentioned previously, building trucks are designed to be light (in line with strength requirements) and have a relatively high ground clearance (thus raising the centre of gravity of the truck).

Conversely warehouse type trucks are required to lift loads to significant heights and thus use a telescopic mast and fork arrangement to load and unload goods in loading bays, typically in the aisles of warehouses. To maximise space efficiency in the warehouse, the aisles are narrow, and goods are stacked vertically in the loading bay.

The conditions and the requirements of a lift truck in a warehouse, and the associated problems these conditions bring, contrast strongly with those conditions found on a building site and the requirements of a building truck.

Warehouses are inside and hence dry, the warehouse floor is generally hard and smooth, usually of concrete, as well as being flat. Therefore there are no associated traction problems associated with the warehouse type truck when moving along an aisle, and for this reason warehouse type trucks employ drive to the two rear wheels.

Operating inside a warehouse requires warehouse type trucks to be powered by power sources where there are minimal harmful emissions, such as gas fuelled internal combustion engines or electric motors. Therefore it would be inappropriate to use a lift truck powered by a petrol or diesel fuelled internal combustion engine in a warehouse.

To maintain the stability of the warehouse type truck, particularly when it is loading and unloading goods into the loading bays, extra weight is added to the rear of the warehouse type truck. The combined extra weight and the weight of the heavy goods exhibits high loading on the tyres of the warehouse type truck, and hence solid tyres are used, i.e. non-pneumatic tyres, which do not significantly deform during loading and unloading. Such tyres exert high loadings on the ground which must be sufficiently strong to resist such loads, hence the use of concrete.

The added extra weight results in the centre of gravity being located towards the rear of the truck. Thus, the stability of the truck is improved when steering at high steer angles.

Storage space is generally at a premium in warehouses and hence goods are stacked to a very significant height and aisles between rows of goods can be narrow. Consequently, it is difficult for a conventional warehouse lift truck to retrieve and deposit goods that are located at right angles to the truck's direction of travel. If the goods are located at some height above the position of the lift truck driver this manoeuvre is further complicated by the difficulty of the driver in seeing whether the forks are at the correct height and lateral position to enter a pallet or the like upon which the goods are stored.

Prior art trucks have attempted to overcome this problem by employing pallet forks mounted on a traversing arrangement at 90° to the truck's direction of travel. The arrangement permits the forks to move into a pallet and retrieve the pallet with no movement of the remainder of the truck occurring. Such truck designs are limited to working at this 90° angle, may suffer from stability problems at height, and can be relatively complex to manufacture.

The present invention seeks to overcome, or at least mitigate, the problems of the prior art.

One aspect of the present invention provides a lift truck comprising a first portion having a carriage mounted on a carriage mast and one or more first wheels, and a second portion distinct from the first and comprising a cab mounted on a cab mast to enable the raising of the cab, and one or more second wheels, the first portion being pivotally mounted to the second portion, to permit the truck to be steered by adjusting the angle of the first portion relative to the second, wherein substantially all controls for controlling the functioning of the truck during depositing and pickup of goods are arranged so as to permit the raising thereof together with the cab.

A second aspect of the present invention provides a method of operating a lift truck comprising a first portion having a carriage mounted on a carriage mast and one or more first wheels, and a second portion distinct from the first and comprising a cab mounted on a cab mast to enable the raising of the cab, and one or more second wheels, the first portion being pivotally mounted to the second portion, to permit the truck to be steered by adjusting the angle of the first portion relative to the second, wherein substantially all controls for controlling the functioning of the truck during depositing and pickup of goods are arranged so as to permit the raising thereof together with the cab comprising the steps of:
i) positioning the carriage at the required height to engage goods to be picked up;
ii) manoeuvring the entire truck into the required position to engage the goods by driving at least one of the first or second truck wheels;
iii) raising the carriage to pick up the goods.

Embodiments of the present invention will now be described, by way of example only, with reference to the accompanying drawings, in which:
FIGURE 1 is a side view of a lift truck according to an embodiment of the present invention; and
FIGURE 2 is a plan view of the lift truck of Figure 1.

Referring to the figures, a warehouse type lift truck indicated generally at 10 comprises a first portion 12 and a second portion 14 that are pivotally mounted together by a pin 34 arranged along a vertical axis.

The first portion 12 comprises a mast 16 that may be raised telescopically using any suitable known means such as hydraulic rams. The mast 16 is shown in unbroken lines in its retracted position and in broken lines in its extended position. The mast 16 shown in the figures is a two-stage mast but in other embodiments other suitable mast arrangements may be provided (eg three stage masts).

A carriage 15 is provided on the front face at the top of the mast 16 and is arranged to mount pallet forks 18 or other suitable attachments such as spikes or grabs (not shown). Suitable arrangements comprising hydraulic rams (not shown) are preferably provided to enable the entire mast 16 to be tilted (i.e. pitched) backwards and forwards and/or the carriage 15 to be tipped forwards and backwards relative to the mast.

A pair of wheels 32 are provided to support the first portion and are arranged in a fixed position relative to each other by an axle (not shown). The axle is preferably arranged to pivot about a horizontally arranged pivot pin 36 to permit the wheels to ride over uneven ground. The wheels 32 are driven by electric motors (not shown), but in other classes of embodiment, hydraulic or other suitable motors may be employed.

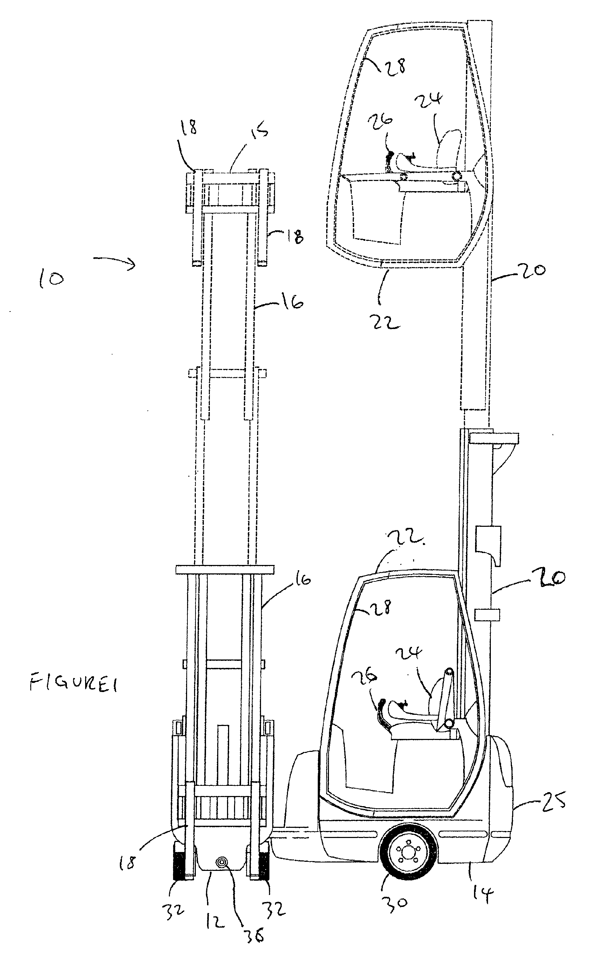

The second portion 14 comprises a cab 22 mounted on a second mast 20. The mast 20 is shown in a retracted position in unbroken lines and an extended position in broken lines. The cab is provided with a safety cage 28, a seat for the truck operator 24 and a plurality of controls 26 (including a steering wheel 27) to control the speed and direction of the truck, as well as to enable the carriage 15 and cab 22 to be lifted. As can be seen from Figure 1, the entire cab 22 including the seat 24 and controls 26 may be raised by the mast 20. The controls lifted with the cab include at least those for controlling the manoeuvring of the truck 10 and controls for lifting the fork carriage 15.

The second portion further comprises a pair of wheels 30 mounted in a substantially fixed position relative to the second portion 14 and weights 25 to improve the stability of the truck 10, particularly when the masts 16 and 20 are raised. A proportion of this weight may be provided by batteries provided in the truck to store the energy required to power the motors.

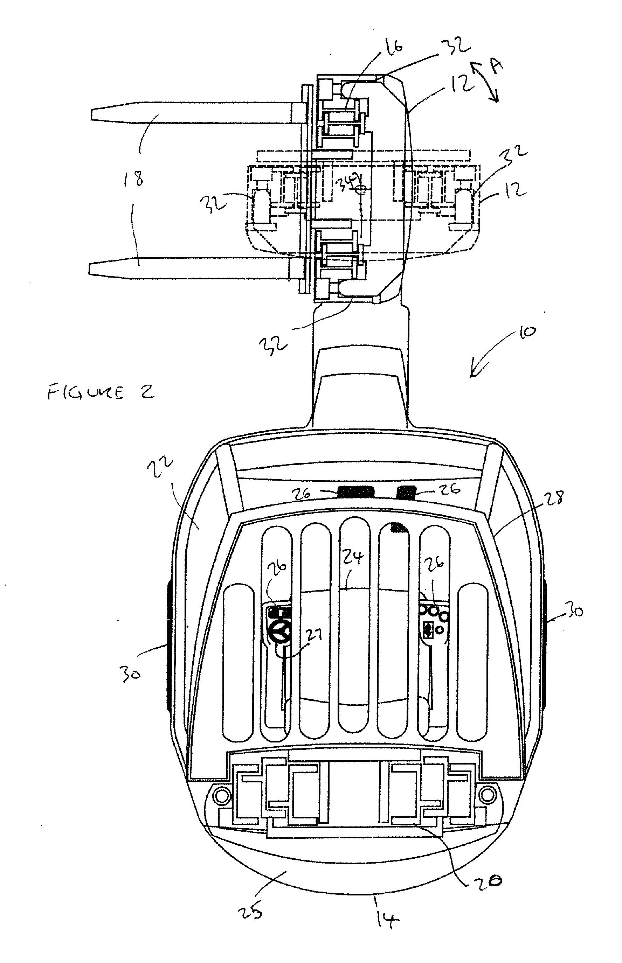

In operation, the truck operator drives down a warehouse aisle to the location from which he/she wishes to retrieve some palletised goods (not shown). If the goods are above ground level, he/she raises the pallet forks 18 to the required level and preferably also raises the cab 22 to a position where he/she has a good view of the pallet forks 18. Since the necessary truck controls 26 are raised with the cab, it is still possible for the truck manoeuvring and lifting functions to be operated. In a preferred embodiment, the cab 22 is automatically raised simultaneously with the forks 18 (e.g. under the control of a microprocessor controller or the like). Once the forks 18 are at the correct height, the operator turns the first portion 12 through 90° in direction A to the position shown in Figure 2. This is preferably achieved by independent motors (not shown) driving wheels 32 in opposite directions under the influence of an input from a control 26 (e.g. steering wheel 27) controlled by the driver. Of course, the first portion is capable of pivoting through 90° in the opposite direction to that shown in Figure 2 (i.e. the first portion can be turned through 90° to the right or left of the straight ahead position shown in broken lines in figure 2). A suitable controller (e.g. A microprocessor controller) may be provided to convert inputs from the steering wheel 27 into the appropriate relative angular velocities of the wheels.

Both wheels 32 may then be driven forward to enable the pallet forks 18 to interengage with a pallet (not shown) in a stack. The operator may then lift the pallet and optionally tilt the pallet backwards to ensure that it is held stably on the truck. To remove the pallet he/she then reverses the drive to wheels 32 so that the pallet is clear of the stack before again causing the wheels to be driven in opposite directions thereby rotating the forks 18 back to a straight-ahead position. Both of the forks 18 and the cab 22 may then be re-lowered so that the goods stacked on the pallet may be transported safely to their desired location and deposited.

One advantage of the lift truck of the present invention is that it requires fewer components than prior art trucks that permanently have the fork carriage 15 mounted at 90° to the vehicle's normal direction of travel, and which use a separate "traverse" mechanism to withdraw and deposit goods from a stack. Additionally, the truck of the present invention is more flexible in its operation than such prior art trucks. Furthermore, by ensuring that wheels 32 remain close to the forks 18 in a fixed relative direction at all times, the stability of the truck 10 may be improved.

It should be understood that numerous changes may be made within the scope of the present invention. The cab 22 or seat 24 may be arranged so as to rotate together with the forks 18. The truck may be driven by any suitable power unit such as electric motors, gas or diesel engines. Steering may be effected by alternative means, such as hydraulic ram(s) or the like mounted between the first and second portions, for example. The truck may be rear wheel drive or four wheel drive (as alternatives to front wheel drive), and in which cases the rear wheels may be driven in opposite directions to permit the truck to be steered.

## Claims

1. A lift truck (10) comprising a first portion (12) having a carriage (15) mounted on a carriage mast (16) and one or more first wheels (32), and a second portion (14) distinct from the first and comprising a cab (22) mounted on a cab mast (20) to enable the raising of the cab, and one or more second wheels (30), the first portion being pivotally mounted to the second portion, to permit the truck to be steered by adjusting the angle of the first portion relative to the second, wherein substantially all controls (26) for controlling the functioning of the truck during depositing and pickup of goods are arranged so as to permit the raising thereof together with the cab.

2. A lift truck according to Claim 1 wherein the or each first wheel is a driven wheel (32).

3. A lift truck according to Claim 1 or Claim 2 wherein two first wheels are provided.

4. A lift truck according to Claim 3 when dependent upon claim 2 wherein differential amounts of drive can be applied to the two first wheels.

5. A lift truck according to any preceding Claim wherein the or each second wheel is a driven wheel (30).

6. A lift truck according to any preceding claim wherein two second wheels are provided (30).

7. A lift truck according to Claim 6 when dependent upon claim 5 wherein differential amounts of drive can be applied to the two second wheels.

8. A lift truck according to any preceding Claim wherein the cab may be raised independently of the carriage.

9. A lift truck according to any one of Claims 1 to 7 wherein the cab is raised automatically when the carriage is raised.

10. A lift truck according to any preceding Claim wherein the cab is capable of rotation relative to the second portion.

11. A lift truck according to any preceding Claim wherein a seat (24) is capable of rotation relative to the cab.

12. A lift truck according to any preceding claim where the mast is fixed to the first portion such that adjusting the angle also adjusts the angle between the mast and the second portion.

13. A lift truck according to any preceding claim which is a warehouse type truck.

14. A method of operating a lift truck (10) of any preceding Claim comprising the steps of:
i) positioning the carriage (15) at the required height to engage goods to be picked up;
ii) manoeuvring the entire truck into the required position to engage the goods by driving at least one of the first (32) or second (30) truck wheels;
iii) raising the carriage to pick up the goods.

15. A method according to Claim 14 wherein in step (i) the cab (22) is raised or lowered to a height corresponding to the position of the carriage.
